# EUROPEAN PATENT SPECIFICATION

(11) **EP 3 562 207 B1**
(45) Date of publication and mention of the grant of the patent: **30.12.2020**
(21) Application number: 18745227.1
(22) Date of filing: 24.01.2018
(51) Int. Cl.: H04W 36/00, H04W 92/20

(54) **DATA TRANSMISSION METHOD, NETWORK DEVICE AND TERMINAL DEVICE**
DATENÜBERTRAGUNGSVERFAHREN, NETZWERKVORRICHTUNG UND ENDGERÄTEVORRICHTUNG
PROCÉDÉ DE TRANSMISSION DE DONNÉES, DISPOSITIF DE RÉSEAU, ET ÉQUIPEMENT TERMINAL

(30) Priority: 26.01.2017 CN 201710061847
(43) Date of publication of application: 30.10.2019
(73) Proprietor: Huawei Technologies Co., Ltd., Longgang District Shenzhen, Guangdong 518129 (CN)
(72) Inventor: JIN, Yinghao, Shenzhen Guangdong 518129 (CN); YANG, Yang, Shenzhen Guangdong 518129 (CN); HAN, Feng, Shenzhen Guangdong 518129 (CN); DU, Yinggang, Shenzhen Guangdong 518129 (CN)
(74) Representative: Goddar, Heinz J.
(86) International application number: PCT/CN2018/074032
(87) International publication number: WO 2018/137666

(56) References cited:
- WO-A1-2015/035591
- CN-A- 104 378 777
- CN-A- 104 869 599
- CN-A- 105 898 894
- CN-A- 105 898 894
- US-A1- 2014 179 325
- "3rd Generation Partnership Project; Technical Specification Group Services and System Aspects; Study on Architecture for Next Generation System (Release 14)", 3GPP STANDARD; 3GPP TR 23.799, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V14.0.0, 16 December 2016 (2016-12-16), pages 1-522, XP051230010,
- ERICSSON: "Handling of inactive UEs", 3GPP DRAFT; R2-163998 - HANDLING OF INACTIVE UES, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Nanjing; 20160523 - 20160527 13 May 2016 (2016-05-13), XP051089658, Retrieved from the Internet: URL:http://www.3gpp.org/ftp/tsg_ran/WG2_RL 2/TSGR2_94/Docs/ [retrieved on 2016-05-13]

## Description

### TECHNICAL FIELD

This application relates to the field of communications technologies, and in particular, to a data transmission method, a network device, and a terminal device.

### BACKGROUND

During movement, a terminal device departs from a cell covered by a network device that originally serves the terminal device, and arrives at a cell covered by a new network device. In the prior art, the terminal device is handed over from the cell covered by the original network device to the cell covered by the new network device. During the handover, a user needs to initiate an access request to the new network device. The new network device obtains context information of the terminal device from the original network device. The new network device needs to transfer a path with a core network device. This increases signaling interaction between the network device and a core network, greatly wasting resources.
3GPP Standard TR 23.799 V14.0.0: "3rd Generation Partnership Project; Technical Specification Group Services and System Aspects; Study on Architecture for Next Generation System (Release 14)" proposals a system architecture for the next generation mobile networks, where the new architecture shall support at least the new RAT(s), the Evolved E-UTRA, non-3GPP accesses and minimize access dependencies.

### SUMMARY

This application provides data transmission methods of claims 1 and 9, a network device of claim 13, computer program product of claim 14 and a system fo claim 15, so as to resolve a problem of relatively large signaling overheads caused by handover when a terminal device in an RRC inactive state moves to a coverage area of a new network device and needs to transmit data. Possible implementation manners are disclosed in the dependent claims.

According to a first aspect, this application provides a data transmission method, including:
determining, by a first network device, that a terminal device enters a radio resource control RRC inactive state;
sending, by the first network device, a first message to a second network device, where the first message is used to configure the second network device, so that the second network device may transmit data for the terminal device in the RRC inactive state; and
receiving, by the first network device, an acknowledgment message that is for the first message and that is sent by the second network device.

The first message includes identification information of the first network device, identification information of the terminal device, a bearer that needs to be provided by the second network device for transmitting data for the terminal device in the RRC inactive state, and address information of the bearer on an Xn interface of the first network device.

In some possible implementations, the first message further includes one or any combination of the following information: network slice information of the bearer, logical channel configuration information corresponding to the bearer, or protocol stack configuration information corresponding to the bearer.

In some possible implementations, the acknowledgment message that is for the first message and that is sent by the second network device includes a bearer that can be provided by the second network device.

In some possible implementations, the acknowledgment message that is for the first message and that is sent by the second network device further includes address information corresponding to the bearer on an Xn interface of the second network device.

In some possible implementations, after the receiving, by the first network device, an acknowledgment message that is for the first message and that is sent by the second network device, the method further includes: sending, by the first network device, a second message to the terminal device, where the second message is used to indicate the second network device that can transmit data for the terminal device in the RRC inactive state.

In some possible implementations, the second message includes identification information of all the second network devices that can send data for the terminal device in the RRC inactive state.

In some possible implementations, the second message includes bitmap information of a radio access network-based notification area RNA of the first network device, and the bitmap information of the RNA of the first network device is used to identify, in an RNA range of the first network device, all the second network devices that can transmit data for the terminal device in the RRC inactive state.

In some possible implementations, the second message includes indicator bit information, and the indicator bit information is used to indicate whether all the second network devices in the RNA range of the first network device can transmit data for the terminal device in the RRC inactive state.

In some possible implementations, the second message further includes a bearer list, and the bearer list is used to indicate a bearer that can be provided by the second network device that can transmit data for the terminal device in the RRC inactive state.

In some possible implementations, after the receiving, by the first network device, an acknowledgment message that is for the first message and that is sent by the second network device, the method further includes:
directly sending, by the first network device to a core network, a received data packet transmitted by the second network device, where the data packet transmitted by the second network device is a data packet that is sent by the terminal device in the RRC inactive state and that is received by the second network device.

In some possible implementations, after the receiving, by the first network device, an acknowledgment message that is for the first message and that is sent by the second network device, the method further includes:
sending, by the first network device to a core network, a received data packet that is transmitted by the second network device and that is processed by using a protocol stack, where the protocol stack includes one or any combination of the following layers: a physical (PHY) layer, a media access control (MAC) layer, a radio link control (RLC) layer, or a packet data convergence protocol (PDCP) layer.

In some possible implementations, the data packet sent by the terminal device in the RRC inactive state includes an indication field, a data field, and a MAC CE field, the MAC CE field is used to store identification information of the terminal device, and the indication field is used to indicate that the data packet includes the MAC CE field.

According to a second aspect, this application provides a data transmission method, including:
receiving, by a second network device, a first message sent by a first network device, wherein the first message is used to configure the second network device, so that the second network device may transmit data for the terminal device in an RRC inactive state; and
sending, by the second network device, an acknowledgment message for the first message to the first network device.

The first message includes identification information of the first network device, identification information of the terminal device, a bearer that needs to be provided by the second network device for transmitting data for the terminal device in the RRC inactive state, and address information of the bearer on an Xn interface of the first network device.

In some possible implementations, the first message further includes one or any combination of the following information: network slice information of the bearer, logical channel configuration information corresponding to the bearer, or protocol stack configuration information corresponding to the bearer.

In some possible implementations, the acknowledgment message for the first message includes a bearer that can be provided by the second network device.

In some possible implementations, the acknowledgment message for the first message further includes address information corresponding to the bearer on an Xn interface of the second network device.

In some possible implementations, after the sending, by the second network device, an acknowledgment message for the first message to the first network device, the method further includes:
receiving, by the second network device, a data packet sent by the terminal device in the RRC inactive state; and
directly sending, by the second network device, the data packet to the first network device.

In some possible implementations, after the sending, by the second network device, an acknowledgment message for the first message to the first network device, the method further includes:
receiving, by the second network device, a data packet sent by the terminal device in the RRC inactive state;
processing, by the second network device, the data packet by using a protocol stack, where the protocol stack includes one or any combination of the following layers: a physical (PHY) layer, a media access control (MAC) layer, a radio link control (RLC) layer, or a packet data convergence protocol (PDCP) layer; and
sending, by the second network device, a processed data packet to the first network device.

In some possible implementations, the data packet sent by the terminal device in the RRC inactive state includes an indication field, a data field, and a MAC CE field, the MAC CE field is used to store identification information of the terminal device, and the indication field is used to indicate that the data packet includes the MAC CE field.

According to a third aspect, this application provides a network device, including:
a processor, configured to determine that a terminal device enters an RRC inactive state; and
a transceiver, configured to: send a first message to a second network device, where the first message is used to configure the second network device, so that the second network device transmits data for the terminal device in the RRC inactive state; and receive an acknowledgment message that is for the first message and that is sent by the second network device.

The first message includes identification information of the network device, identification information of the terminal device, a bearer that needs to be provided by the second network device for transmitting data for the terminal device in the RRC inactive state, and address information of the bearer on an Xn interface of the network device.

According to a fourth aspect, this application provides a network device, including:
a transceiver, configured to: receive a first message sent by a first network device, where the first message is used to configure the network device, so that the network device transmits data for a terminal device in an RRC inactive state; and configured to send an acknowledgment message for the first message to the first network device.

The first message includes identification information of the first network device, identification information of the terminal device, a bearer that needs to be provided by the network device for transmitting data for the terminal device in the RRC inactive state, and address information of the bearer on an Xn interface of the first network device.

In the methods described in this application, if the first network device determines that the terminal device enters the RRC inactive state, the first network device sends, to the second network device, a first message for configuring the second network device, so that the second network device can transmit data for the terminal device in the RRC inactive state, to establish a data transmission path with the second network device. When receiving the data packet sent by the terminal device, the second network device sends the data packet to the first network device by using the data transmission path, so that the first network device sends the data packet to a core network. This reduces signaling overheads in an entire process in which the terminal device moves to a coverage area of the second network device and needs to transmit data to the core network.

### DESCRIPTION OF DRAWINGS

FIG 1 is a schematic diagram of an application scenario according to an embodiment of this application;
FIG. 2 is a schematic diagram of another application scenario according to an embodiment of this application;
FIG. 3 is a schematic diagram of still another application scenario according to an embodiment of this application;
FIG. 4 is a flowchart of a data transmission method according to an embodiment of this application;
FIG. 5 is another flowchart of a data transmission method according to an embodiment of this application;
FIG 6 is a schematic block diagram of a network device 600 according to an embodiment of this application;
FIG 7 is a schematic block diagram of a network device 700 according to an embodiment of this application; and
FIG. 8 is a schematic block diagram of a terminal device 800 according to an embodiment of this application.

### DESCRIPTION OF EMBODIMENTS

To describe the technical solutions in the embodiments of the present invention more clearly, the following briefly describes the accompanying drawings required for describing the embodiments of the present invention. Apparently, the accompanying drawings in the following description show merely some embodiments of the present invention, and a person of ordinary skill in the art may derive other drawings from these accompanying drawings without creative efforts.

It should be understood that the technical solutions of the embodiments of this application may be applied to various communications systems, such as a global system for mobile communications (Global System for Mobile communication, "GSM" for short), a code division multiple access (Code Division Multiple Access, "CDMA" for short) system, a wideband code division multiple access (Wideband Code Division Multiple Access, "WCDMA" for short) system, a general packet radio service (General Packet Radio Service, "GPRS" for short), a long term evolution (Long Term Evolution, "LTE" for short) system, a universal mobile telecommunications system (Universal Mobile Telecommunication System, "UMTS" for short) and other current communications systems, and in particular, a future 5G system.

A terminal device in the embodiments of this application may also be user equipment (User Equipment, "UE" for short), an access terminal, a subscriber unit, a subscriber station, a mobile station, a terminal device, a remote station, a remote terminal, a mobile device, a user terminal, a terminal, a wireless communications device, a user agent, or a user apparatus. The access terminal may be a cellular phone, a cordless phone, a session initiation protocol (Session Initiation Protocol, "SIP" for short) phone, a wireless local loop (Wireless Local Loop, "WLL" for short) station, a personal digital assistant (Personal Digital Assistant, "PDA" for short), a handheld device having a wireless communication function, a computing device or another processing device connected to a wireless modem, a vehicle-mounted device, a wearable device, a terminal device in a future 5G network, or a terminal device in a future evolved public land mobile network (Public Land Mobile Network, "PLMN" for short).

A network device in the embodiments of this application may be a device configured to communicate with the terminal device. The network device may be a base transceiver station (Base Transceiver Station, "BTS" for short) in a GSM or a CDMA system, or may be a NodeB (NodeB, "NB" for short) in a WCDMA system, or may be an evolved NodeB (Evolutional NodeB, "eNB or eNodeB" for short) in an LTE system, or a radio controller in a cloud radio access network (Cloud Radio Access Network, "CRAN" for short) scenario. Alternatively, the network device may be a relay node, an access point, a vehicle-mounted device, a wearable device, a network device in a future 5G network, a network device in a future evolved PLMN network, or the like.

A radio resource control RRC inactive state mentioned in the embodiments of this application is a state of a terminal device in a 5G network. A terminal device has three states in a 5G network: an RRC connected state, an RRC inactive state, and an idle state. The RRC connected state and the idle state are similar to those in an LTE system. Details are not described herein. The RRC inactive state is a state specific to the terminal device in the 5G network. The terminal device in the RRC inactive state has the following features:

1. Even if the terminal device has no data to be transmitted on an air interface, RRC context information of a user of the terminal device still remains on an RAN side, and the RAN side reserves a connection to a core network for the terminal device in the RRC inactive state.

2. The terminal device in the RRC inactive state may directly send an uplink small data packet, and does not need to be transferred to the RRC connected state by establishing RRC signaling.

In general, the RRC inactive state of the terminal device is a state between the RRC connected state and the idle state. Power savings can be achieved when the terminal device is in the RRC inactive state. When exchanging data with the RAN side, the terminal device does not need to be transferred to the RRC connected state, and can directly send/receive data. In addition, the RAN side may also directly and quickly send data to the core network or receive data from the core network, because the RAN side reserves a connection to the core network for the terminal device in the RRC inactive state.

Application scenarios in the embodiments of this application are described below.

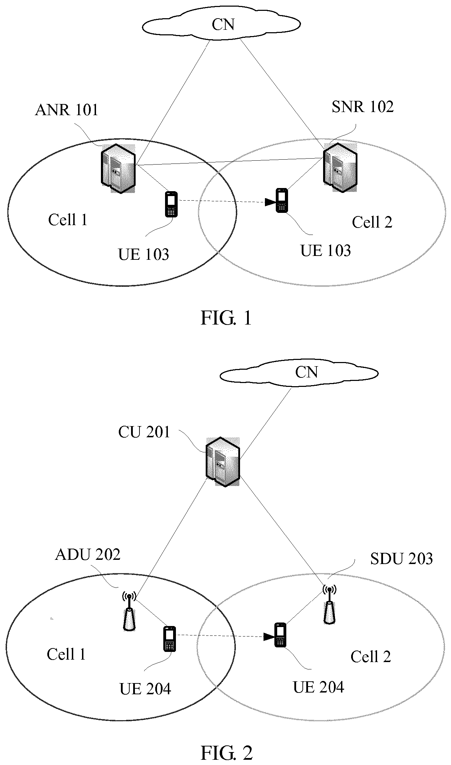

FIG. 1 shows an application scenario according to an embodiment of this application.

This scenario includes: a first network device, at least one second network device, and a terminal device. The first network device may be an Anchor New Radio ("ANR" for short) 101, the second network device may be an Assistant New Radio ("SNR" for short) 102, and the terminal device may be UE 103. A wired connection exists between the ANR 101 and the SNR 102. The UE 103 is currently in a Cell 1 covered by the ANR 101. The UE 103 is in a moving state and moves from the Cell 1 covered by the ANR 101 to a Cell 2 covered by the SNR 102.

FIG. 2 shows another application scenario according to an embodiment of this application.

This scenario includes: a central unit (Central Unit, "CU" for short) 201, an anchor distribution unit (Anchor Distribute Unit, "ADU" for short) 202, an assistant distribution unit (Assistant Distribute Unit, "SDU" for short) 203, and UE 204. The CU 201 controls the ADU 202 and the SDU 203. The UE 204 is currently in a Cell 1 covered by the ADU 202. The UE 204 is in a moving state and moves from the Cell 1 covered by the ADU 202 to a Cell 2 covered by the SDU 203.

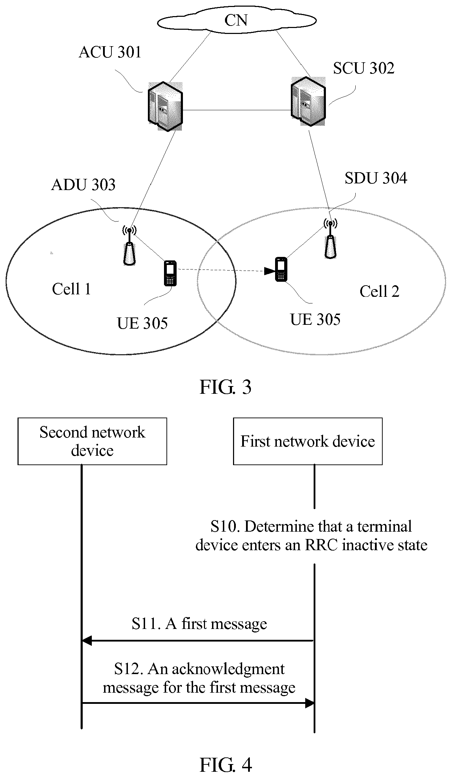

FIG. 3 shows still another application scenario according to an embodiment of this application.

This scenario includes: an anchor central unit (Anchor Central Unit, "ACU" for short) 301, an assistant central unit (Assistant Central Unit, "SCU" for short) 302, an anchor distribution unit (Anchor Distribute Unit, "ADU" for short) 303, an assistant distribution unit (Assistant Distribute Unit, "SDU" for short) 304, and UE 305. The ACU 301 controls the ADU 303, the SCU 302 controls the SDU 304, and a wired connection exists between the ACU 301 and the SCU 302. The UE 305 is currently in a Cell 1 covered by the ADU 303. The UE 305 is in a moving state and moves from the Cell 1 covered by the ADU 303 to a Cell 2 covered by the SDU 304.

Methods provided in this application are described below.

It should be noted herein that, the first network device may send a first message to a plurality of adjacent network devices. The second network device herein is merely a general name, and is not limited to one network device.

In addition, the network device in this application is an access network device.

### Embodiment 1

As shown in FIG. 4, a data transmission method includes the following steps.

S10. A first network device determines that a terminal device enters an RRC inactive state.

In S10, the terminal device in a coverage area of the first network device enters the RRC inactive state from an RRC connected state. It can be learned from a feature of the terminal device in the RRC inactive state that the first network device reserves at least one data plane connection of the terminal device to a core network.

The terminal device enters the RRC inactive state from the RRC connected state, and the first network device determines that the terminal device enters the RRC inactive state.

That the first network device determines that the terminal device enters the RRC inactive state includes: determining, by the first network device, that the terminal device is to enter the RRC inactive state, or determining, by the first network device, that the terminal device has entered the RRC inactive state.

The first network device determines that the terminal device is to enter the RRC inactive state. Specifically, the first network device may determine, based on a service status of the terminal device and the like, that the terminal device enters the RRC inactive state from the RRC connected state. For example, if it is detected that the terminal device transmits no service data over a period of time, for example, there is no uplink and downlink data transmission, the terminal device may be allowed to enter the RRC inactive state from the RRC connected state, thereby achieving power savings.

The first network device determines that the terminal device has entered the RRC inactive state. Specifically, the first network device has previously transferred the terminal device from the RRC connected state to the RRC inactive state by using RRC signaling. The RRC signaling may be state transition signaling or other RRC signaling.

S11. The first network device sends a first message to a second network device, where the first message is used to configure the second network device, so that the second network device may transmit data for the terminal device in the RRC inactive state.

In S11, as described in S10, in a coverage area of the first network device, the terminal device whose state is transferred enters the RRC inactive state from an RRC connected state. When the first network device detects that the state of the terminal device is transferred, the first network device sends the first message to a plurality of adjacent second network devices. The first message is intended to configure the second network device, so that when the terminal device in the RRC inactive state moves from the coverage area of the first network device to a coverage area of the second network device and needs to transmit data, the second network device may forward, to the first network device, the data that is sent by the terminal device to the second network device.

For the first network device, to achieve the objective of the first message, the first message sent by the first network device needs to include the following information: identification information of the first network device, identification information of the terminal device, a bearer that needs to be provided by the second network device for transmitting data for the terminal device in the RRC inactive state, and address information of the bearer on an Xn interface of the first network device.

A bearer that needs to be provided by the second network device for transmitting data for the terminal device in the RRC inactive state may be determined by referring to a bearer of the terminal device on the first network device. For example, the terminal device has five bearers (a bearer A, a bearer B, a bearer C, a bearer D, and a bearer E) on the first network device. The first network device may consider that the second network device needs to provide the five bearers (the bearer A, the bearer B, the bearer C, the bearer D, and the bearer E). Alternatively, the first network device considers that the second network device only needs to provide three bearers (the bearer A, the bearer B, and the bearer C) to implement data transmission. In this case, in the first message sent by the first network device, the bearer that needs to be provided by the second network device for transmitting data for the terminal device in the RRC inactive state is the three bearers (the bearer A, the bearer B, and the bearer C).

The address information of the bearer on the Xn interface of the first network device is used to instruct the second network device to send data of a corresponding bearer to a corresponding address on the Xn interface of the first network device. The Xn interface is an interface between gNBs (gNB)/cells in the fifth generation communications system.

The identification information of the terminal device may uniquely indicate the terminal device in the RAN Notification Area, and may be in one or a combination of the following forms: a C-RNTI (a cell radio network temporary identifier, which is a dynamic identifier allocated by a base station to UE, and uniquely identifies UE on a cell air interface) and an identifier in a third state allocated by the first network device to the terminal device. The identifier may be in a form of the C-RNTI only or the C-RNTI plus an identifier of the first network device.

The identifier of the first network device may be at least one of the following forms: a physical layer cell identifier, a global cell identifier, and a gNB UE XnAP ID (an ID that uniquely indicates a user on the Xn interface of the first network device).

In addition to the foregoing information, the first message may further include network slice information of the bearer, and/or logical channel configuration information corresponding to the bearer, and/or protocol stack configuration information corresponding to the bearer.

The protocol stack configuration information may be indication information, or configuration information of a specific protocol stack parameter and/or a function. The indication information is used to indicate that the second network device is configured based on a specified parameter and/or function.

The logical channel configuration information may be indication information, or configuration information of a specific logical channel parameter and/or a function. The indication information is used to indicate that the second network device is configured based on a specified parameter and/or function.

S12. The second network device sends an acknowledgment message for the first message to the first network device.

In S12, there are two mechanisms for the second network device to send the acknowledgment message for the first message.

A first mechanism is that the second network device sends the bearer that can be provided by the second network device to the first network device.

Further, the second network device may further send, to the first network device, the bearer that can be provided by the second network device and address information that is corresponding to the bearer that can be provided by the second network device and that is on an Xn interface of the second network device.

For example, in the first message sent by the first network device in S11, bearers that need to be provided by the second network device for transmitting data for the terminal device in the RRC inactive state include five bearers (a bearer A, a bearer B, a bearer C, a bearer D, and a bearer E). After receiving the first message in S11, the second network device determines, based on a resource scheduling status of the second network device, that only three of the five bearers can be provided (for example, the bearer A, the bearer B, and the bearer E). Therefore, in this case, the second network device sends the acknowledgment message for the first message. The acknowledgment message for the first message includes the three bearers (the bearer A, the bearer B, and the bearer E) that can be provided by the second network device.

Further, the second network device may send address information corresponding to the three bearers (the bearer A, the bearer B, and the bearer E) on the Xn interface of the second network device to the first network device.

A second mechanism is that the second network device sends the acknowledgment message to the first network device based on the resource scheduling status of the second network device and if all the bearers required in the first message in S11 can be provided. Still further, the second network device sends, to the first network device, the address information that is corresponding to the bearer required in the first message and that is on the Xn interface of the second network device.

If the second network device cannot provide all the bearers required in the first message in S11 based on the resource scheduling status of the second network device, the second network device rejects the request of the first network device. In this case, the acknowledgment message that is for the first message and that is sent by the second network device includes rejection information.

In this embodiment of this application, if the terminal device in the RRC inactive state moves from the coverage area of the first network device to the coverage area of the second network device and needs to send data to the second network device, the second network device identifies the terminal device and a bearer to which the data sent by the terminal device belongs, and sends the data to the first network device based on the address information corresponding to the bearer in the first message on the Xn interface of the first network device, so that the first network device sends the data to the core network.

In this embodiment of this application, the second network device transmits the data of the terminal device to the first network device, so that the first network device sends the data to the core network, without a need to establish a path between the second network device and the core network so that the second network device sends the data to the core network. This reduces signaling overheads in an entire process in which the terminal device sends the data to the core network.

### Embodiment 2

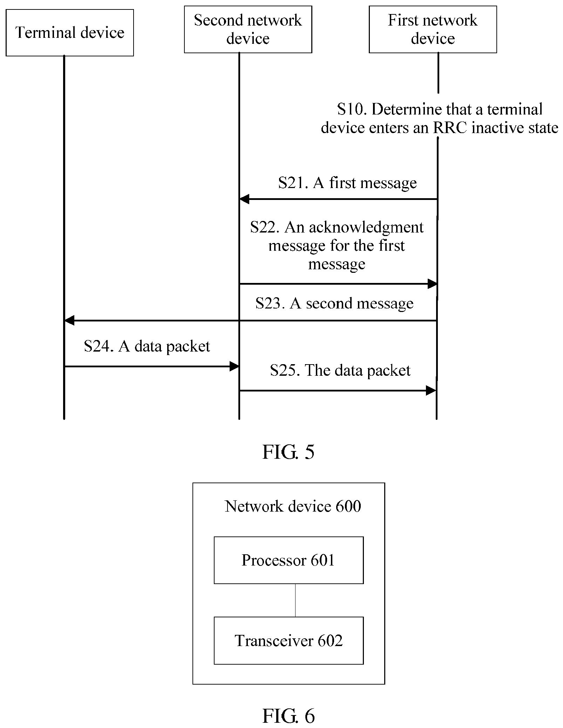

As shown in FIG. 5, a data transmission method includes the following steps.

S20. A first network device determines that a terminal device enters an RRC inactive state.

S21. The first network device sends a first message to a second network device, where the first message is used to configure the second network device, so that the second network device transmits data for the terminal device in the RRC inactive state.

S22. The second network device sends an acknowledgment message for the first message to the first network device.

S20 to S22 are the same as S10 to S12 in the foregoing embodiment, and details are not described herein again.

S23. The first network device sends a second message to the terminal device, where the second message is used to indicate the second network device that can transmit data for the terminal device in the RRC inactive state.

In S23, the first network device sends the second message to the terminal device based on the received acknowledgment message for the first message, where the second message indicates the second network device that can transmit data for the terminal device in the RRC inactive state.

The second message may have a plurality of forms, for example, a list of identification information of the second network device that can transmit data for the terminal device, for another example, bitmap information of an RNA of the first network device, and for still another example, indicator bit information.
1. The second message includes the list of identification information of the second network device that can transmit data for the terminal device, and all the second network devices in the list can relay data for the terminal device.
2. The second message includes the bitmap information of the RNA of the first network device. The bitmap information is specifically bitmap information of the RNA (RAN Notification Area) allocated by the first network device to the terminal in the RRC inactive state. The bitmap information is used to identify all the second network devices that can relay data for the terminal device in an RNA range allocated by the first network device to the terminal in the RRC inactive state.

The RNA allocated by the first network device to the terminal in the RRC inactive state is a radio access network based notification area (RAN based notification area, RNA) that is configured by the first network device for the terminal device when the terminal is in the inactive state. The RNA includes one or more cells. When the terminal device in the inactive state reselects another cell in the RAN range, the terminal device may not inform a network. However, when the terminal device reselects a cell beyond the RNA range, the terminal device needs to inform the network.

The bitmap information is a multi-bit string. A quantity of bits of the string may be the same as a quantity of cells in an RNA cell list, or may be a fixed quantity of bits. Each bit in the bitmap information indicates whether a corresponding cell in the RNA cell list (the RNA cell list indicates a cell included in the RNA) supports the terminal device in transmitting data in the inactive state. For example, if cells included in the RNA cell list are respectively a cell #1, a cell #2, a cell #4, and a cell #6, the bitmap information includes at least 4 bits. In addition, it is set that 0 in the bitmap information indicates that the cell does not support the terminal device in transmitting data in the inactive state, but 1 indicates that the cell supports the terminal device in transmitting data in the inactive state. Therefore, if the bitmap is 0101, it means that the cell #2 and the cell #6 support the terminal in transmitting data in the inactive state, but the cell #1 and the cell #4 do not support the terminal device in transmitting data in the inactive state. It should be noted that, the bitmap information may include more than 4 bits. For example, it is specified in a standard that the bitmap information includes fixed 16 bits. If only four cells are included in the RNA, it means that 4 bits of the 16 bits are specified to represent whether the cell in the RNA supports the terminal device in transmitting data (for example, the first 4 bits) in the inactive state, and the other 12 bits may be filled with 0. If six cells are included in the RNA, six bits may be specified to represent whether the cell in the RNA supports the terminal device in transmitting data (for example, the first six bits) in the inactive state, and the other 10 bits may be filled with 0.

The cell described in the foregoing paragraph may be corresponding to a corresponding network device. For example, the cell #1 and the cell #4 are cells covered by a second network device A, and the cell #2 and the cell #6 are cells covered by a second network device B.

3. The second message includes the indicator bit information, where the indicator bit information is used to indicate whether all the second network devices in the RNA range of the first network device can transmit data for the terminal device in the inactive state, and the RNA of the first network device is the RNA allocated by the first network device to the terminal in the RRC inactive state. The indicator bit information is represented by 1 bit. For example, if the bit is 1, it indicates that all the second network devices in the RNA range of the first network device can transmit data for the terminal device in the inactive state; if the bit is 0, it indicates that not all the second network devices in the RNA range of the first network device can transmit data for the terminal device in the inactive state.

Still further, in addition to indicating the second network device that can transmit data for the terminal device in the RRC inactive state, the second message may further indicate a bearer that can be provided by each second network device that can relay data. For example, the second network device indicated in the second message includes a second network device A, a second network device B, and a second network device C. A bearer that can be provided by the second network device A includes a bearer 1, a bearer 3, and a bearer 5; a bearer that can be provided by the second network device B includes a bearer 2 and a bearer 4; and a bearer that can be provided by the second network device C includes a bearer 3 and a bearer 5. The second message includes a bearer list of the second network devices that can transmit data for the terminal device in the RRC inactive state, as shown in the following table.

| Second network device that can transmit data for the terminal device in the RRC inactive state | Bearer that can be provided |
|---|---|
| Second network device A | Bearer 1, bearer 3, and bearer 5 |
| Second network device B | Bearer 2 and bearer 4 |
| Second network device C | Bearer 3 and bearer 5 |

Alternatively, for example, the second network device indicated in the second message includes a second network device A, a second network device B, and a second network device C. A bearer that can be provided by the second network device A includes a bearer 1, a bearer 3, and a bearer 5; a bearer that can be provided by the second network device B includes a bearer 2 and a bearer 4; and a bearer that can be provided by the second network device C includes a bearer 3 and a bearer 5. A minimum set may be selected. To be specific, the bitmap information indicates that only the second network device A and the second network device B can transmit data for the terminal in the RRC inactive state, and bearers that can be provided are the bearer 3 and the bearer 5.

S24. The terminal device in the RRC inactive state sends a data packet to the second network device.

In S24, after sending a pilot signal to obtain an uplink synchronization and/or uplink scheduling resource by using a random access process, the terminal device sends an uplink data packet to the second network device. Alternatively, in the case of no access process, the terminal device directly sends the data packet to the second network device by using a contention-based resource or a reserved resource (that is, in a Grant free manner).

The data packet sent by the terminal device in the RRC inactive state is a small data packet, and is generally a data packet whose size is less than a preset threshold. The terminal device does not need to establish an RRC connection to transfer a state of the terminal device to the RRC connected state and then send the small data packet. The terminal device directly sends the small data packet in the RRC inactive state. According to the method in this application, a problem of how to send an uplink small data packet to a core network when the terminal device in the RRC inactive state moves from a coverage area of the original first network device to a coverage area of the second network device is resolved.

The data packet sent by the terminal device in the RRC inactive state includes an indication field, a data field, and a MAC CE field. The MAC CE field is used to store identification information of the terminal device, and the indication field is used to indicate that the data packet includes the MAC CE field. Locations of the indication field, the data field, and the MAC CE field are not limited in this application.

In this application, the terminal device packages and generates to-be-sent data at a MAC layer, and the terminal device generates a to-be-sent data packet at the MAC layer. The data packet includes an indication field, a data field, and a MAC CE field. The MAC CE field is a new field, and is used to store identification information of the terminal device. After receiving the data packet, the second network device can obtain the identification information of the terminal device at the MAC layer through parsing, so as to quickly know a terminal device from which the data packet comes.

S25. The second network device sends the received data packet to the first network device, so that the first network device sends the data packet to a core network.

In S25, the second network device sends the received data packet to the first network device in two manners.
1. The second network device receives and directly forwards the data packet sent by the terminal device in the RRC inactive state.
2. The second network device receives the data packet sent by the terminal device in the RRC inactive state, and then sends the data packet after protocol stack processing to the first network device. The protocol stack includes one or any combination of the following layers: a physical (PHY) layer, a media access control (MAC) layer, a radio link control (RLC) layer, or a packet data convergence protocol (PDCP) layer.

The first network device sends the data packet to the core network in two manners as well.
1. The first network device receives and directly forwards the data packet sent by the second network device.
2. The first network device receives the data packet sent by the second network device, and then sends the data packet after protocol stack processing to the core network. The protocol stack includes one or any combination of the following layers: a physical (PHY) layer, a media access control (MAC) layer, a radio link control (RLC) layer, or a packet data convergence protocol (PDCP) layer.

In this embodiment of this application, the second network device sends the data of the terminal device to the first network device, so that the first network device sends the data to the core network, without a need to establish a path between the second network device and the core network so that the second network device sends the data to the core network. This reduces signaling overheads in an entire process in which the terminal device transmits the data to the core network.

The methods in the foregoing embodiment 1 and embodiment 2 are applicable to three application scenarios mentioned in this application.

In the application scenario shown in FIG. 1, the first network device is an anchor network device ANR 101, and the second network device is an assistant network device SNR 102.

In the application scenario shown in FIG. 2, the first network device is a central unit CU 201, and the second network device is an assistant distribution unit SDU 203, where the central unit CU 201 controls the assistant distribution unit SDU 203.

In the application scenario shown in FIG. 3, the first network device is an anchor central unit ACU 301, the second network device is an assistant central unit SCU 302. The anchor central unit ACU 301 controls an anchor distribution unit ADU 303, and the assistant central unit SCU 302 controls an assistant distribution unit SDU 304.

That the first network device sends the first message to the second network device includes:
sending, by the anchor central unit ACU 301, the first message to the assistant central unit SCU 302, so that the assistant central unit SCU 302 sends the first message to the assistant distribution unit SDU 304.

That the first network device receives an acknowledgment message that is for the first message and that is sent by the second network device includes:
receiving, by the anchor central unit ACU 301, the acknowledgment message that is for the first message and that is sent by the assistant distribution unit SDU 304 by using the assistant central unit SCU 302, where the acknowledgment message for the first message is generated by the assistant distribution unit SDU 304 based on the received first message sent by the assistant central unit SCU 302.

The foregoing has described in detail the data transmission method in the embodiments of this application. The following describes a network device and a terminal device in the embodiments of this application. It should be understood that, the network device and the terminal device in the embodiments of this application may perform the data transmission method in the foregoing embodiments. To be specific, for a specific working process of the following two network devices and a specific working process of the terminal device, refer to a corresponding process in the method in the foregoing embodiment.

### Embodiment 3

FIG. 6 shows a schematic block diagram of a network device 600 according to an embodiment of this application. The network device 600 may be the first network device in the foregoing method embodiments. As shown in FIG. 6, the network device 600 includes:
a processor 601, configured to determine that a terminal device enters an RRC inactive state; and
a transceiver 602, configured to: send a first message to a second network device, where the first message is used to configure the second network device, so that the second network device transmits data for the terminal device in the RRC inactive state; and receive an acknowledgment message that is for the first message and that is sent by the second network device.

The first message includes identification information of the network device, identification information of the terminal device, a bearer that needs to be provided by the second network device for transmitting data for the terminal device in the RRC inactive state, and address information of the bearer on an Xn interface of the network device. Optionally, the first message further includes one or any combination of the following information: network slice information of the bearer, logical channel configuration information corresponding to the bearer, or protocol stack configuration information corresponding to the bearer.

The acknowledgment message that is for the first message and that is sent by the second network device includes a bearer that can be provided by the second network device. Optionally, the acknowledgment message that is for the first message and that is sent by the second network device further includes address information corresponding to the bearer on an Xn interface of the second network device.

In some possible implementations, the transceiver 602 is further configured to send a second message to the terminal device, where the second message is used to indicate the second network device that can transmit data for the terminal device in the RRC inactive state.

Optionally, the second message includes identification information of all the second network devices that can send data for the terminal device in the RRC inactive state. Optionally, the second message includes bitmap information of an RNA of the first network device, and the bitmap information of the RNA of the first network device is used to identify, in an RNA range of the first network device, all the second network devices that can transmit data for the terminal device in the RRC inactive state. Optionally, the second message includes indicator bit information, and the indicator bit information is used to indicate whether all the second network devices in the RNA range of the first network device can transmit data for the terminal device in the RRC inactive state. Optionally, the second message further includes a bearer list, and the bearer list is used to indicate a bearer that can be provided by the second network device that can transmit data for the terminal device in the RRC inactive state.

In some possible implementations, the transceiver 602 is further configured to: receive a data packet transmitted by the second network device, and send the data packet to a core network, where the data packet transmitted by the second network device is a data packet that is sent by the terminal device in the RRC inactive state and that is received and directly forwarded by the second network device, or a data packet that is sent by the terminal device in the RRC inactive state and that is received by the second network device and processed by using a protocol stack.

In some possible implementations, the transceiver 602 is further configured to receive a data packet transmitted by the second network device, where the data packet transmitted by the second network device is a data packet that is sent by the terminal device in the RRC inactive state and that is received and directly forwarded by the second network device, or a data packet that is sent by the terminal device in the RRC inactive state and that is received by the second network device and processed by using a protocol stack. The processor 601 is further configured to process, by using a protocol stack, a data packet transmitted by the second network device, where the protocol stack includes one or any combination of the following layers: a physical (PHY) layer, a media access control (MAC) layer, a radio link control (RLC) layer, or a packet data convergence protocol (PDCP) layer. The transceiver 602 is further configured to send, to the core network, the data packet that is transmitted by the second network device and that is processed by using the protocol stack.

In the foregoing two possible implementations, optionally, the data packet sent by the terminal device in the RRC inactive state includes an indication field, a data field, and a MAC CE field, the MAC CE field is used to store identification information of the terminal device, and the indication field is used to indicate that the data packet includes the MAC CE field.

The network device 600 in this embodiment of this application may be corresponding to the first network device in the method in the embodiments of this application, and the foregoing and other operations and/or functions of modules in the network device 600 are respectively intended to implement corresponding procedures of the methods. For brevity, details are not described herein again.

### Embodiment 4

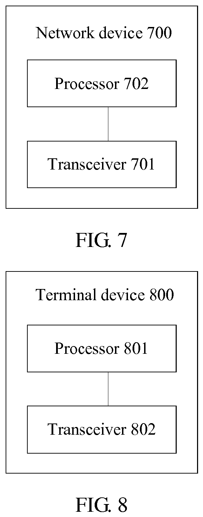

FIG. 7 shows a schematic block diagram of a network device 700 according to an embodiment of this application. The network device 700 may be the second network device in the foregoing method embodiments. As shown in FIG. 7, the network device 700 includes:
a transceiver 701, configured to: receive a first message sent by a first network device, where the first message is used to configure the network device, so that the network device transmits data for a terminal device in an RRC inactive state, and configured to send an acknowledgment message for the first message to the first network device.

The first message includes identification information of the first network device, identification information of the terminal device, a bearer that needs to be provided by the network device for transmitting data for the terminal device in the RRC inactive state, and address information of the bearer on an Xn interface of the first network device. Optionally, the first message further includes one or any combination of the following information: network slice information of the bearer, logical channel configuration information corresponding to the bearer, or protocol stack configuration information corresponding to the bearer.

The acknowledgment message for the first message includes a bearer that can be provided by the network device. Optionally, the acknowledgment message for the first message further includes address information corresponding to the bearer on an Xn interface of the network device.

In some possible implementations, the transceiver 701 is further configured to: receive a data packet sent by the terminal device in the RRC inactive state; and directly forward the data packet to the first network device.

In some possible implementations, the transceiver 701 is further configured to receive a data packet sent by the terminal device in the RRC inactive state. The terminal device further includes a processor 702, configured to process the data packet by using a protocol stack, where the protocol stack includes one or any combination of the following layers: a physical (PHY) layer, a media access control (MAC) layer, a radio link control (RLC) layer, or a packet data convergence protocol (PDCP) layer. The transceiver 701 is further configured to send a processed data packet to the first network device.

In the foregoing two possible implementations, the data packet sent by the terminal device in the RRC inactive state includes an indication field, a data field, and a MAC CE field, the MAC CE field is used to store identification information of the terminal device, and the indication field is used to indicate that the data packet includes the MAC CE field.

The network device 700 in this embodiment of this application may be corresponding to the second network device in the method in the embodiments of this application, and the foregoing and other operations and/or functions of modules in the network device 700 are respectively intended to implement corresponding procedures of the methods. For brevity, details are not described herein again.

### Embodiment 5

FIG. 8 shows a schematic block diagram of a terminal device 800 according to an embodiment of this application. The terminal device 800 may be the terminal device in the foregoing method embodiments. As shown in FIG. 8, the terminal device 800 includes:
a processor 801, configured to control the terminal device 800 to enter an RRC inactive state; and
a transceiver 802, configured to send, in the RRC inactive state, a data packet to a second network device.

Optionally, the data packet includes an indication field, a data field, and a MAC CE field, the MAC CE field is used to store identification information of the terminal device, and the indication field is used to indicate that the data packet includes the MAC CE field.

In some possible implementations, the transceiver 802 is further configured to receive a second message sent by the first network device, where the second message is used to indicate the second network device that can transmit data for the terminal device in the RRC inactive state.

Optionally, the second message includes identification information of all the second network devices that can transmit data for the terminal device in the RRC inactive state. Optionally, the second message includes bitmap information of an RNA of the first network device, and the bitmap information of the RNA of the first network device is used to identify, in an RNA range of the first network device, all the second network devices that can transmit data for the terminal device in the RRC inactive state. Optionally, the second message includes indicator bit information, and the indicator bit information is used to indicate whether all the second network devices in the RNA range of the first network device can transmit data for the terminal device in the RRC inactive state. Optionally, the second message further includes a bearer list, and the bearer list is used to indicate a bearer that can be provided by the second network device that can transmit data for the terminal device in the RRC inactive state.

The terminal device 800 in this embodiment of this application may be corresponding to the terminal device in the method in the embodiments of this application, and the foregoing and other operations and/or functions of modules in the terminal device 800 are respectively intended to implement corresponding procedures of the methods. For brevity, details are not described herein again.

It should be understood that, the term "and/or" in the embodiments of the present invention describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, device, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A data transmission method, comprising:
determining (S10), by a first network device, that a terminal device enters a radio resource control RRC inactive state;
**characterized in that** the method further comprises:
sending (s11, s21), by the first network device, a first message to a second network device, wherein the first message is used to configure the second network device to transmit data for the terminal device in the RRC inactive state, wherein the first message comprises identification information of the first network device, identification information of the terminal device, a bearer that needs to be provided by the second network device for transmitting data for the terminal device in the RRC inactive state, and address information of the bearer on an Xn interface of the first network device; and
receiving (s12, s22), by the first network device, an acknowledgment message that is for the first message and that is sent by the second network device.

2. The method according to claim 1, wherein the first message further comprises one or any combination of the following information: network slice information of the bearer, logical channel configuration information corresponding to the bearer, or protocol stack configuration information corresponding to the bearer.

3. The method according to claim 1 or 2, wherein the acknowledgment message that is for the first message and that is sent by the second network device comprises a bearer that can be provided by the second network device, and, in particular,
address information corresponding to the bearer on an Xn interface of the second network device.

4. The method according to claim 1, after the receiving (s12, s22), by the first network device, an acknowledgment message that is for the first message and that is sent by the second network device, further comprising: sending (s23), by the first network device, a second message to the terminal device, wherein the second message is used to indicate the second network device that can transmit data for the terminal device in the RRC inactive state, and, in particular,
the second message comprises: identification information of all the second network devices that can send data for the terminal device in the RRC inactive state; or
bitmap information of a radio access network-based notification area RNA of the first network device, and the bitmap information of the RNA of the first network device is used to identify, in an RNA range of the first network device, all the second network devices that can transmit data for the terminal device in the RRC inactive state; or
indicator bit information, and the indicator bit information is used to indicate whether all the second network devices in the RNA range of the first network device can transmit data for the terminal device in the RRC inactive state.

5. The method according to claim 4, wherein the second message comprises: a bearer list, and the bearer list is used to indicate a bearer that can be provided by the second network device that can transmit data for the terminal device in the RRC inactive state.

6. The method according to claim 1, after the receiving (s12, s22), by the first network device, an acknowledgment message that is for the first message and that is sent by the second network device, further comprising:
directly sending, by the first network device to a core network, a received data packet transmitted by the second network device, wherein the data packet transmitted by the second network device is a data packet that is sent by the terminal device in the RRC inactive state and that is received by the second network device.

7. The method according to claim 1, after the receiving (s12, s22), by the first network device, an acknowledgment message that is for the first message and that is sent by the second network device, further comprising:
sending, by the first network device to a core network, a received data packet that is transmitted by the second network device and that is processed by using a protocol stack, wherein the protocol stack comprises one or any combination of the following layers: a physical, PHY, layer, a media access control, MAC, layer, a radio link control, RLC, layer, or a packet data convergence protocol, PDCP, layer.

8. The method according to claim 6 or 7, wherein the data packet sent by the terminal device in the RRC inactive state comprises an indication field, a data field, and a MAC CE field, the MAC CE field is used to store identification information of the terminal device, and the indication field is used to indicate that the data packet comprises the MAC CE field.

9. A data transmission method, comprising:
receiving (S11, S21), by a second network device, a first message sent by a first network device, wherein the first message is used to configure the second network device to transmit data for the terminal device in an RRC inactive state, the first message comprises identification information of the first network device, identification information of the terminal device, a bearer that needs to be provided by the second network device for transmitting data for the terminal device in the RRC inactive state, and address information of the bearer on an Xn interface of the first network device; and
sending (S12, S22), by the second network device, an acknowledgment message for the first message to the first network device.

10. The method according to claim 9, wherein the acknowledgment message for the first message comprises a bearer that can be provided by the second network device.

11. The method according to claim 9, after the sending (S12, S22), by the second network device, an acknowledgment message for the first message to the first network device, further comprising:
receiving (S24), by the second network device, a data packet sent by the terminal device in the RRC inactive state; and
directly sending (S25), by the second network device, the data packet to the first network device.

12. The method according to claim 9, after the sending, by the second network device, an acknowledgment message for the first message to the first network device, further comprising:
receiving (S24), by the second network device, a data packet sent by the terminal device in the RRC inactive state;
processing, by the second network device, the data packet by using a protocol stack, wherein the protocol stack comprises one or any combination of the following layers: a physical (PHY) layer, a media access control (MAC) layer, a radio link control (RLC) layer, or a packet data convergence protocol (PDCP) layer; and
sending (S25), by the second network device, a processed data packet to the first network device.

13. A network device, configured to perform the method of one of the claims 1 to 8 or the method of one of the claims 9 to 12.

14. A computer program product, comprising computer program code, wherein when the computer program code runs on a network device, the network device performs the steps of a method according to any one of claims 1 to 8 or any one of claims 9 to 12.

15. A system comprises a first network device, a second network device and a terminal device wirelessly connected to the first network device;
the terminal device is configured to enter a radio resource control RRC inactive state; and
the first network device is configured to determine that the terminal device enters an RRC inactive state;
**characterized in that** the first network device is configured to send a first message to the second network device, wherein the first message is used to configure the second network device to transmit data for the terminal device in the RRC inactive state, wherein the first message comprises identification information of the first network device, identification information of the terminal device, a bearer that needs to be provided by the second network device for transmitting data for the terminal device in the RRC inactive state, and address information of the bearer on an Xn interface of the first network device;
the second network device is configured to receive the first message sent by the first network device and send an acknowledgment message for the first message to the first network device; and
the first network device is further configured to receive the acknowledgment message.

## Patentansprüche

1. Datenübertragungsverfahren, umfassend:
Bestimmen (S10), dass eine erste Endgerätevorrichtung in einen inaktiven Radio-Resource-Control-(RRC-)Zustand eintritt, durch eine erste Netzwerkvorrichtung;
**dadurch gekennzeichnet, dass** das Verfahren ferner Folgendes umfasst:
Senden (s11, s21) einer ersten Nachricht an eine zweite Netzwerkvorrichtung durch die erste Netzwerkvorrichtung, wobei die erste Nachricht verwendet wird, um die zweite Netzwerkvorrichtung zu konfigurieren, um Daten für die Endgerätevorrichtung in dem inaktiven RRC-Zustand zu übertragen, wobei die ersten Nachricht Identifikationsinformationen der ersten Netzwerkvorrichtung, Identifikationsinformationen der Endgerätevorrichtung, einen Träger, der zum Übertragen von Daten für die Endgerätevorrichtung in dem inaktiven RRC-Zustand durch die zweite Netzwerkvorrichtung bereitgestellt werden muss, und Adressinformationen des Trägers auf einer Xn-Schnittstelle der ersten Netzwerkvorrichtung umfasst; und
Empfangen (s12, s22) einer Bestätigungsnachricht für die erste Nachricht, die durch die zweite Netzwerkvorrichtung gesendet wird, durch die erste Netzwerkvorrichtung.

2. Verfahren nach Anspruch 1, wobei die erste Nachricht ferner eine oder eine beliebige Kombination der folgenden Informationen umfasst: Network-Slice-Informationen des Trägers, Informationen zu einer Konfiguration eines logischen Kanals, die dem Träger entsprechen, oder Informationen zu einer Konfiguration eines Protokollstapels, die dem Träger entsprechen.

3. Verfahren nach Anspruch 1 oder 2, wobei die Bestätigungsnachricht für die erste Nachricht, die durch die zweite Netzwerkvorrichtung gesendet wird, einen Träger, der durch die zweite Netzwerkvorrichtung bereitgestellt werden kann, und insbesondere Adressinformationen umfasst, die dem Träger auf einer Xn-Schnittstelle der zweiten Netzwerkvorrichtung entsprechen.

4. Verfahren nach Anspruch 1, ferner umfassend nach dem Empfangen (s12, s22) einer Bestätigungsnachricht für die erste Nachricht, die durch die zweite Netzwerkvorrichtung gesendet wird, durch die erste Netzwerkvorrichtung: Senden (s23) einer zweiten Nachricht an die Endgerätevorrichtung durch die erste Netzwerkvorrichtung, wobei die zweite Nachricht verwendet wird, um die zweite Netzwerkvorrichtung anzugeben, die Daten für die Endgerätevorrichtung in dem inaktiven RRC-Zustand übertragen kann, und wobei
die zweite Nachricht inbesondere Folgendes umfasst: Identifikationsinformationen aller der zweiten Netzwerkvorrichtungen, die Daten für die Endgerätevorrichtung in dem inaktiven RRC-Zustand senden können; oder
Bitmap-Informationen eines Benachrichtigungsbereichs auf Funkzugangsnetzbasis (RNA) der ersten Netzwerkvorrichtung, und wobei die Bitmap-Informationen des RNA der ersten Netzwerkvorrichtung verwendet werden, um alle die zweiten Netzwerkvorrichtung in einer RNA-Reichweite der ersten Netzwerkvorrichtung zu identifizieren, die Daten für die Endgerätevorrichtung in dem inaktiven RRC-Zustand übertragen können; oder
Indikatorbit-Informationen, und wobei die Indikatorbit-Informationen verwendet werden, um anzugeben, ob alle die zweiten Netzwerkvorrichtungen in der RNA-Reichweite der ersten Netzwerkvorrichtung Daten für die Endgerätevorrichtung in dem inaktiven RRC-Zustand übertragen können.

5. Verfahren nach Anspruch 4, wobei die zweite Nachricht Folgendes umfasst: eine Trägerliste, und wobei die Trägerliste verwendet wird, um einen Träger anzugeben, der durch die zweite Netzwerkvorrichtung bereitgestellt werden kann, die Daten für die Endgerätevorrichtung in dem inaktiven RRC-Zustand übertragen kann.

6. Verfahren nach Anspruch 1, ferner umfassend nach dem Empfangen (s12, s22) einer Bestätigungsnachricht für die erste Nachricht, die durch die zweite Netzwerkvorrichtung gesendet wird, durch die erste Netzwerkvorrichtung:
direktes Senden eines empfangenen Datenpakets, das durch die zweite Netzwerkvorrichtung übertragen wird, durch die erste Netzwerkvorrichtung an ein Kernnetzwerk, wobei das Datenpaket, das durch die zweite Netzwerkvorrichtung übertragen wird, ein Datenpaket ist, das durch die Endgerätevorrichtung in dem inaktiven RRC-Zustand gesendet wird und das durch die zweite Netzwerkvorrichtung empfangen wird.

7. Verfahren nach Anspruch 1, ferner umfassend nach dem Empfangen (s12, s22) einer Bestätigungsnachricht für die erste Nachricht, die durch die zweite Netzwerkvorrichtung gesendet wird, durch die erste Netzwerkvorrichtung:
Senden eines empfangenen Datenpakets, das durch die zweite Netzwerkvorrichtung übertragen wird und das unter Verwendung eines Protokollstapels verarbeitet wird, durch die erste Netzwerkvorrichtung an ein Kernnetzwerk, wobei der Protokollstapel eine oder eine beliebige Kombination der folgenden Schichten umfasst: eine physische (PHY-)Schicht, eine Media-Access-Control-(MAC-)Schicht, eine Radio-Link-Control-(RLC-)Schicht oder eine Packet-Data-Convergence-Protocol-(PDCP-)Schicht.

8. Verfahren nach Anspruch 6 oder 7, wobei das Datenpaket, das durch die Endgerätevorrichtung in dem inaktiven RRC-Zustand gesendet wird, ein Angabefeld, ein Datenfeld und ein MAC-CE-Feld umfasst, wobei das MAC-CE-Feld verwendet wird, um Identifikationsinformationen der Endgerätevorrichtung zu speichern, und das Angabefeld verwendet wird, um anzugeben, dass das Datenpaket das MAC-CE-Feld umfasst.

9. Datenübertragungsverfahren, umfassend:
Empfangen (S11, S21) einer ersten Nachricht, die durch eine erste Netzwerkvorrichtung gesendet wird, durch eine zweite Netzwerkvorrichtung, wobei die erste Nachricht verwendet wird, um die zweite Netzwerkvorrichtung zu konfigurieren, um Daten für die Endgerätevorrichtung in einem inaktiven RRC-Zustand zu übertragen, wobei die ersten Nachricht Identifikationsinformationen der ersten Netzwerkvorrichtung, Identifikationsinformationen der Endgerätevorrichtung, einen Träger, der zum Übertragen von Daten für die Endgerätevorrichtung in dem inaktiven RRC-Zustand durch die zweite Netzwerkvorrichtung bereitgestellt werden muss, und Adressinformationen des Trägers auf einer Xn-Schnittstelle der ersten Netzwerkvorrichtung umfasst; und
Senden (S12, S22) einer Bestätigungsnachricht der ersten Nachricht an die erste Netzwerkvorrichtung durch die zweite Netzwerkvorrichtung.

10. Verfahren nach Anspruch 9, wobei die Bestätigungsnachricht der ersten Nachricht einen Träger umfasst, der durch die zweite Netzwerkvorrichtung bereitgestellt werden kann.

11. Verfahren nach Anspruch 9, ferner umfassend nach dem Senden (S12, S22) einer Bestätigungsnachricht der ersten Nachricht an die erste Netzwerkvorrichtung durch die zweite Netzwerkvorrichtung:
Empfangen (S24) eines Datenpakets, das durch die Endgerätevorrichtung in dem inaktiven RRC-Zustand gesendet wird, durch die zweite Netzwerkvorrichtung; und
direktes Senden (S25) des Datenpakets an die erste Netzwerkvorrichtung durch die zweite Netzwerkvorrichtung.

12. Verfahren nach Anspruch 9, ferner umfassend nach dem Senden einer Bestätigungsnachricht der ersten Nachricht an die erste Netzwerkvorrichtung durch die zweite Netzwerkvorrichtung:
Empfangen (S24) eines Datenpakets, das durch die Endgerätevorrichtung in dem inaktiven RRC-Zustand gesendet wird, durch die zweite Netzwerkvorrichtung;
Verarbeiten des Datenpakets unter Verwendung eines Protokollstapels durch die zweite Netzwerkvorrichtung, wobei der Protokollstapel eine oder eine beliebige Kombination der folgenden Schichten umfasst: eine physische (PHY-)Schicht, eine Media-Access-Control-(MAC-)Schicht, eine Radio-Link-Control-(RLC-)Schicht oder eine Packet-Data-Convergence-Protocol-(PDCP-)Schicht; und
Senden (S25) eines verarbeiteten Datenpakets an die erste Netzwerkvorrichtung durch die zweite Netzwerkvorrichtung.

13. Netzwerkvorrichtung, die konfiguriert ist, um das Verfahren nach einem der Ansprüche 1 bis 8 oder das Verfahren nach einem der Ansprüche 9 bis 12 durchzuführen.

14. Computerprogrammprodukt, umfassend Computerprogrammcode, wobei die Netzwerkvorrichtung die Schritte eines Verfahrens nach einem der Ansprüche 1 bis 8 oder nach einem der Ansprüche 9 bis 12 durchführt, wenn der Computerprogrammcode auf einer Netzwerkvorrichtung ausgeführt wird.

15. System, umfassend eine erste Netzwerkvorrichtung, eine zweite Netzwerkvorrichtung und eine Endgerätevorrichtung, die drahtlos mit der ersten Netzwerkvorrichtung verbunden ist;
wobei die Endgerätevorrichtung konfiguriert ist, um in einen inaktiven Radio-Resource-Control-(RRC-)Zustand einzutreten; und
die erste Netzwerkvorrichtung konfiguriert ist, um zu bestimmen, dass die Endgerätevorrichtung in einen inaktiven RRC-Zustand eintritt;
**dadurch gekennzeichnet, dass** die erste Netzwerkvorrichtung konfiguriert ist, um eine erste Nachricht an die zweite Netzwerkvorrichtung zu senden, wobei die erste Nachricht verwendet wird, um die zweite Netzwerkvorrichtung zu konfigurieren, um Daten für die Endgerätevorrichtung in dem inaktiven RRC-Zustand zu übertragen, wobei die ersten Nachricht Identifikationsinformationen der ersten Netzwerkvorrichtung, Identifikationsinformationen der Endgerätevorrichtung, einen Träger, der zum Übertragen von Daten für die Endgerätevorrichtung in dem inaktiven RRC-Zustand durch die zweite Netzwerkvorrichtung bereitgestellt werden muss, und Adressinformationen des Trägers auf einer Xn-Schnittstelle der ersten Netzwerkvorrichtung umfasst;
die zweite Netzwerkvorrichtung konfiguriert ist, um die erste Nachricht, die durch die erste Netzwerkvorrichtung gesendet wird, zu empfangen und eine Bestätigungsnachricht der ersten Nachricht an die erste Netzwerkvorrichtung zu senden; und
die erste Netzwerkvorrichtung ferner konfiguriert ist, um die Bestätigungsnachricht zu empfangen.

## Revendications

1. Procédé de transmission de données, comprenant :
le fait de déterminer (S10), par un premier dispositif de réseau, qu'un équipement terminal entre dans un état inactif de commande de ressource radio, RRC ;
**caractérisé en ce que** le procédé comprend en outre :
l'envoi (s11, s21), par le premier dispositif de réseau, d'un premier message à un second dispositif de réseau, dans lequel le premier message est utilisé pour configurer le second dispositif de réseau pour transmettre des données pour l'équipement terminal dans l'état inactif RRC, dans lequel le premier message comprend une information d'identification du premier dispositif de réseau, une information d'identification de l'équipement terminal, un support qui nécessite d'être fourni par le second dispositif de réseau pour la transmission de données à l'équipement terminal dans l'état inactif RRC, et une information d'adresse du support sur une interface Xn du premier dispositif de réseau ; et
la réception (s12, s22), par le premier dispositif de réseau, d'un message d'acquittement qui est lié au premier message et qui est envoyé par le second dispositif de réseau.

2. Procédé selon la revendication 1, dans lequel le premier message comprend en outre une ou une combinaison quelconque des informations suivantes : une information de tranche de réseau du support, une information de configuration de canal logique correspondant au support ou une information de configuration de pile de protocoles correspondant au support.

3. Procédé selon la revendication 1 ou 2, dans lequel le message d'acquittement, qui est lié au premier message et qui est envoyé par le second dispositif de réseau, comprend un support qui peut être fourni par le second dispositif de réseau, et, en particulier,
une information d'adresse correspondant au support sur une interface Xn du second dispositif de réseau.

4. Procédé selon la revendication 1, après la réception (s12, s22), par le premier dispositif de réseau, d'un message d'acquittement qui est lié au premier message et qui est envoyé par le second dispositif de réseau, comprenant en outre : l'envoi (s23), par le premier dispositif de réseau, d'un second message à l'équipement terminal, dans lequel le second message est utilisé pour indiquer au second dispositif de réseau qu'il peut transmettre des données pour l'équipement terminal dans l'état inactif RRC, et, en particulier,
le second message comprend : une information d'identification de tous les seconds dispositifs de réseau qui peuvent envoyer des données pour l'équipement terminal dans l'état inactif RRC ; ou
une information bitmap d'une zone de notification basée sur un réseau d'accès radio, RNA, du premier dispositif de réseau, et l'information bitmap de la RNA du premier dispositif de réseau est utilisée pour identifier, dans une portée de la RNA du premier dispositif de réseau, tous les seconds dispositifs de réseau qui peuvent transmettre des données pour l'équipement terminal dans l'état inactif RRC ; ou
une information de bit d'indicateur, et l'information de bit d'indicateur est utilisée pour indiquer si tous les seconds dispositifs de réseau dans la portée de la RNA du premier dispositif de réseau peuvent transmettre des données pour l'équipement terminal dans l'état inactif RRC.

5. Procédé selon la revendication 4, dans lequel le second message comprend : une liste de supports, et la liste de supports est utilisée pour indiquer un support qui peut être fourni par le second dispositif de réseau qui peut transmettre des données pour l'équipement terminal dans l'état inactif RRC.

6. Procédé selon la revendication 1, après la réception (s12, s22), par le premier dispositif de réseau, d'un message d'acquittement qui est lié au premier message et qui est envoyé par le second dispositif de réseau, comprenant en outre :
l'envoi de manière directe, par le premier dispositif de réseau à un réseau fédérateur, d'un paquet de données reçu transmis par le second dispositif de réseau, dans lequel le paquet de données transmis par le second dispositif de réseau est un paquet de données qui est envoyé par l'équipement terminal dans l'état inactif RRC et qui est reçu par le second dispositif de réseau.

7. Procédé selon la revendication 1, après la réception (s12, s22), par le premier dispositif de réseau, d'un message d'acquittement qui est lié au premier message et qui est envoyé par le second dispositif de réseau, comprenant en outre :
l'envoi, par le premier dispositif de réseau à un réseau fédérateur, d'un paquet de données reçu qui est transmis par le second dispositif de réseau et qui est traité à l'aide d'une pile de protocoles, dans lequel la pile de protocoles comprend une ou une combinaison quelconque des couches suivantes : une couche physique, PHY, une couche de commande d'accès au support physique, MAC, une couche de commande de liaison radio, RLC, ou une couche de protocole de convergence de données en paquet, PDCP.

8. Procédé selon la revendication 6 ou 7, dans lequel le paquet de données envoyé par l'équipement terminal dans l'état inactif RRC comprend un champ d'indication, un champ de données et un champ MAC CE, le champ MAC CE est utilisé pour stocker une information d'identification de l'équipement terminal, et le champ d'indication est utilisé pour indiquer que le paquet de données comprend le champ MAC CE.

9. Procédé de transmission de données, comprenant :
la réception (S11, S21), par un second dispositif de réseau, d'un premier message envoyé par un premier dispositif de réseau, dans lequel le premier message est utilisé pour configurer le second dispositif de réseau pour transmettre des données pour l'équipement terminal dans un état inactif RRC, le premier message comprend une information d'identification du premier dispositif de réseau, une information d'identification de l'équipement terminal, un support qui nécessite d'être fourni par le second dispositif de réseau pour transmettre des données pour l'équipement terminal dans l'état inactif RRC, et une information d'adresse du support sur une interface Xn du premier dispositif de réseau ; et
l'envoi (S12, S22), par le second dispositif de réseau, d'un message d'acquittement pour le premier message au premier dispositif de réseau.

10. Procédé selon la revendication 9, dans lequel le message d'acquittement pour le premier message comprend un support qui peut être fourni par le second dispositif de réseau.

11. Procédé selon la revendication 9, après l'envoi (S12, S22), par le second dispositif de réseau, d'un message d'acquittement pour le premier message au premier dispositif de réseau, comprenant en outre :
la réception (S24), par le second dispositif de réseau, d'un paquet de données envoyé par l'équipement terminal dans l'état inactif RRC ; et
l'envoi de manière directe (S25), par le second dispositif de réseau, du paquet de données au premier dispositif de réseau.

12. Procédé selon la revendication 9, après l'envoi, par le second dispositif de réseau, d'un message d'acquittement pour le premier message au premier dispositif de réseau, comprenant en outre :
la réception (S24), par le second dispositif de réseau, d'un paquet de données envoyé par l'équipement terminal dans l'état inactif RRC ;
le traitement, par le second dispositif de réseau, du paquet de données à l'aide d'une pile de protocoles, dans lequel la pile de protocoles comprend une ou une combinaison quelconque des couches suivantes : une couche physique, PHY, une couche de commande d'accès au support physique, MAC, une couche de commande de liaison radio, RLC, ou une couche de protocole de convergence de données en paquet, PDCP ; et
l'envoi (S25), par le second dispositif de réseau, d'un paquet de données traité au premier dispositif de réseau.

13. Dispositif de réseau, configuré pour réaliser le procédé selon l'une quelconque des revendications 1 à 8 ou le procédé selon l'une quelconque des revendications 9 à 12.

14. Produit-programme d'ordinateur, comprenant un code de programme d'ordinateur, dans lequel, lorsque le code de programme d'ordinateur s'exécute sur un dispositif de réseau, le dispositif de réseau réalise les étapes d'un procédé selon l'une quelconque des revendications 1 à 8 ou selon l'une quelconque des revendications 9 à 12.

15. Système comprenant un premier dispositif de réseau, un second dispositif de réseau et un équipement terminal connecté sans fil au premier dispositif de réseau ;
l'équipement terminal est configuré pour entrer dans un état inactif de commande de ressource radio, RRC ; et
le premier dispositif de réseau est configuré pour déterminer que l'équipement terminal entre dans un état inactif RRC ;
**caractérisé en ce que** le premier dispositif de réseau est configuré pour envoyer un premier message au second dispositif de réseau, dans lequel le premier message est utilisé pour configurer le second dispositif de réseau pour transmettre des données pour l'équipement terminal dans l'état inactif RRC, dans lequel le premier message comprend une information d'identification du premier dispositif de réseau, une information d'identification de l'équipement terminal, un support qui nécessite d'être fourni par le second dispositif de réseau pour la transmission de données pour l'équipement terminal dans l'état inactif RRC, et une information d'adresse du support sur une interface Xn du premier dispositif de réseau ;
le second dispositif de réseau est configuré pour recevoir le premier message envoyé par le premier dispositif de réseau et envoyer un message d'acquittement pour le premier message au premier dispositif de réseau, et
le premier dispositif de réseau est en outre configuré pour recevoir le message d'acquittement.
